# EUROPEAN PATENT APPLICATION

(11) **EP 4 467 926 A1**
(43) Date of publication of application: **27.11.2024**
(21) Application number: 22927375.0
(22) Date of filing: 27.12.2022
(51) Int. Cl.: G01B 11/30, B23K 9/04, B23K 31/00, B29C 64/106, B29C 64/393, B33Y 10/00, B33Y 50/02, G01B 11/02

(54) **DEFECT DETECTION METHOD, ADDITIVE MANUFACTURED ARTICLE MANUFACTURING METHOD, DEFECT DETECTION DEVICE, AND ADDITIVE MANUFACTURING DEVICE**

(30) Priority: 21.02.2022 JP 2022025093
(71) Applicant: KABUSHIKI KAISHA KOBE SEIKO SHO (KOBE STEEL, LTD.), Hyogo 651-8585 (JP)
(72) Inventor: HUANG Shuo, Kobe-shi, Hyogo 651-227 (JP)
(74) Representative: TBK
(86) International application number: PCT/JP2022/048300
(87) International publication number: WO 2023/157493

(57) **Abstract**

A defect detection method for detecting a welding defect that occurs in an additively manufactured object when the additively manufactured object is built by depositing beads formed by melting and solidifying a filler metal, the method including: a height detection step of detecting a height distribution of a surface shape of the additively manufactured object during the building; an image generation step of representing information on the detected height distribution as a variable of a brightness value of each pixel of a two-dimensional image, and generating a height information image obtained by converting the information on the height distribution into information on a distribution of the brightness value; a feature portion detection step of detecting a shape feature portion having a specific shape feature according to a level of the brightness value of the height information image; and a determination step of determining a possibility that the detected shape feature portion becomes the welding defect.

## Description

### TECHNICAL FIELD

The present invention relates to a defect detection method, a method for manufacturing an additively manufactured object, a defect detection device, and an additive manufacturing device.

### BACKGROUND ART

A technique is known in which beads formed by melting and solidifying a filler metal are deposited to build an additively manufactured object formed of a plurality of layers of beads. For example, PTL 1 discloses an inspection device that inspects a bead, which is formed during manufacturing of an additively manufactured object, by measuring a surface shape of the formed bead and comparing the measured surface shape with a reference shape. In the inspection device disclosed in PTL 1, an image of a bright line is captured when a bead is irradiated with a linear laser light, and a height of a bead surface is detected from a position of the bright line in the captured image. The measurement of a three-dimensional shape is not limited to the above-described light cutting method, and a measurement device according to various methods is widely adopted.

### CITATION LIST

### PATENT LITERATURE

Patent Literature 1: JP2019-215297A

### SUMMARY OF INVENTION

### TECHNICAL PROBLEM

However, measurement data of the three-dimensional shape obtained by being measured using various methods is, for example, coordinate information of the bright line in the case of the light cutting method disclosed in PTL 1, and is information indirectly representing a shape of a measurement object. Therefore, in post-processing such as obtaining a desired shape feature from the measurement data, calculation for the post-processing becomes complicated, and it is difficult to speed up the processing. In addition, the measurement data is the indirect information, and thus an amount of data is likely to become huge, and it is necessary to secure a sufficient storage capacity for storing data at normal times.

In a case in which additive manufacturing is performed, when there is a narrow portion in a base on which beads are formed, penetration of the filler metal becomes insufficient in the narrow portion, and a possibility that a welding defect such as an unwelded portion occurs increases. Therefore, it is conceivable to automatically detect a specific shape feature portion (narrow portion) by measuring a base shape during the building, and to change welding conditions or the like of the narrow portion or to change bead formation paths in the narrow portion, thereby reducing the occurrence of the welding defects in advance. However, as described above, it is necessary to calculate a huge amount of measurement data at high speed, and it is often practically difficult to change the welding conditions and the bead formation paths in real time according to a shape measurement result. In addition, an original shape may not be accurately reproduced based on the measurement data indirectly representing the shape of the measurement object, and it is particularly difficult to stably detect a minute shape without omission.

Therefore, an object of the present invention is to provide a defect detection method in which a specific shape feature portion can be easily detected based on a measurement result of a surface shape of an additively manufactured object while reducing an amount of data required to be stored, and defect detection can be performed at high speed without detection omission, a method for manufacturing an additively manufactured object using the defect detection method, a defect detection device, an additive manufacturing device, and a program.

### SOLUTION TO PROBLEM

The present invention includes the following configuration.
(1) A defect detection method for detecting a welding defect that occurs in an additively manufactured object when the additively manufactured object is built by depositing beads formed by melting and solidifying a filler metal, the method including:
   a height detection step of detecting a height distribution of a surface shape of the additively manufactured object during the building;
   an image generation step of representing information on the detected height distribution as a variable of a brightness value of each pixel of a two-dimensional image, and generating a height information image obtained by converting the information on the height distribution into information on a distribution of the brightness value;
   a feature portion detection step of detecting a shape feature portion having a specific shape feature according to a level of the brightness value of the height information image; and
   a determination step of determining a possibility that the detected shape feature portion becomes the welding defect.
(2) A method for manufacturing an additively manufactured object, the method including:
   changing a manufacturing plan for building the additively manufactured object so as to reduce occurrence of the welding defect based on information on the welding defect detected by using the defect detection method according to (1); and
   building the additively manufactured object based on the changed manufacturing plan.
(3) A defect detection device that detects a welding defect that occurs in an additively manufactured object when the additively manufactured object is built by depositing beads formed by melting and solidifying a filler metal, the device including:
   a shape detection unit configured to detect a height distribution of a surface shape of the additively manufactured object;
   an image generation unit configured to represent information on the detected height distribution as a variable of a brightness value of each pixel of a two-dimensional image, and generate a height information image obtained by converting the information on the height distribution into information on a distribution of the brightness value;
   a feature portion detection unit configured to detect a shape feature portion having a specific shape feature according to a level of the brightness value of the height information image; and
   a defect determination unit configured to determine a possibility that the detected shape feature portion becomes the welding defect.
(4) An additive manufacturing system including:
   the defect detection device according to (3);
   a building control device configured to change a manufacturing plan for building the additively manufactured object so as to reduce occurrence of the welding defect detected by the defect detection device; and
   a building device configured to build the additively manufactured object based on the changed manufacturing plan.
(5) A program causing a computer to execute a procedure of a defect detection method for detecting a welding defect that occurs in an additively manufactured object when the additively manufactured object is built by depositing beads formed by melting and solidifying a filler metal, the program causing the computer to execute:
   a height detection procedure of detecting a height distribution of a surface shape of the additively manufactured object during the building;
   an image generation procedure of representing information on the detected height distribution as a variable of a brightness value of each pixel of a two-dimensional image, and generating a height information image obtained by converting the information on the height distribution into information on a distribution of the brightness value;
   a feature portion detection procedure of detecting a shape feature portion having a specific shape feature according to a level of the brightness value of the height information image; and
   a determination procedure of determining a possibility that the detected shape feature portion becomes the welding defect.

### ADVANTAGEOUS EFFECTS OF INVENTION

According to the present invention, a specific shape feature portion can be easily detected based on a measurement result of the surface shape of the additively manufactured object while reducing an amount of data required to be stored, and defect detection can be performed at high speed without detection omission.

### BRIEF DESCRIPTION OF DRAWINGS

FIG. 1 is a schematic diagram illustrating an overall configuration of an additive manufacturing system.
FIG. 2 is a block diagram illustrating a functional configuration of a building control device.
FIG. 3 is a flowchart illustrating a building procedure of an additively manufactured object.
FIG. 4 is a flowchart illustrating a procedure of a welding defect detection method.
FIG. 5 is a diagram illustrating an example of features of a narrow portion in a cross section of beads orthogonal to a bead formation direction.
FIG. 6A is a diagram illustrating a state in which an interval between the pair of beads illustrated in FIG. 5 is changed.
FIG. 6B is a diagram illustrating a state in which the interval between the pair of beads illustrated in FIG. 5 is changed.
FIG. 7 is a schematic diagram illustrating a state in which a shape detector measures shapes of beads.
FIG. 8 is an image of height information image data obtained by converting height information of each bead illustrated in FIG. 7 into brightness information.
FIG. 9A is a diagram illustrating an image processing result in which contours of bead shapes are extracted according to changes in brightness or the like, and narrow portions are extracted from the height information image illustrated in FIG. 8.
FIG. 9B is a diagram illustrating an image processing result in which the contours of the bead shapes are extracted according to the changes in brightness or the like, and the narrow portion is extracted from the height information image illustrated in FIG. 8.
FIG. 10 is a configuration diagram of a torch and the shape detector.
FIG. 11 is a diagram illustrating a shape detection result by the shape detector when the torch and the shape detector move integrally.

### DESCRIPTION OF EMBODIMENTS

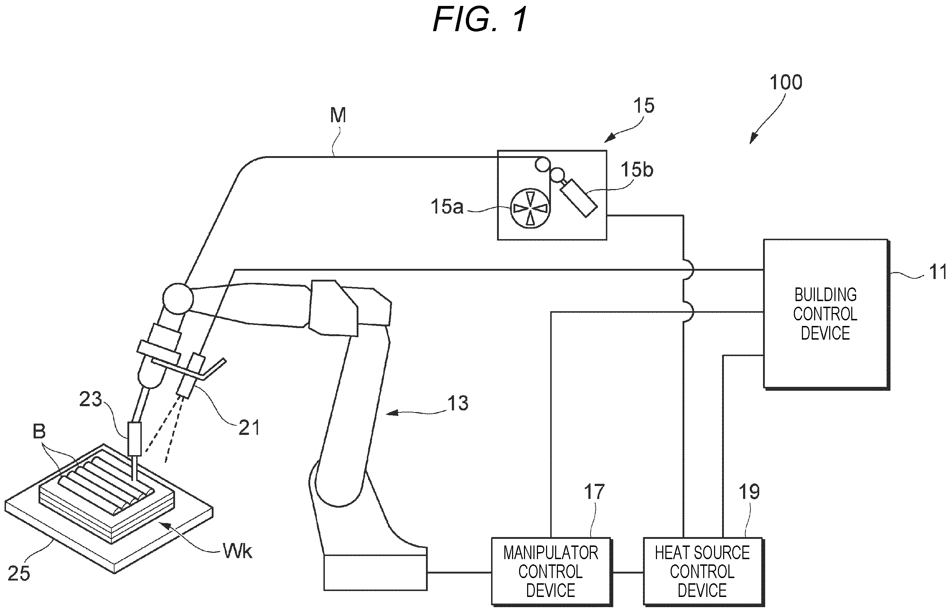

Hereinafter, embodiments of the present invention will be described in detail with reference to the drawings. Here, a case in which a defect detection method according to the present invention is applied to an additive manufacturing system for manufacturing an additively manufactured object will be described as an example. FIG. 1 is a schematic diagram illustrating an overall configuration of the additive manufacturing system.

An additive manufacturing system 100 according to the present embodiment includes a building control device 11, a manipulator 13, a filler metal supply device 15, a manipulator control device 17, a heat source control device 19, and a shape detector 21.

The manipulator control device 17 controls the manipulator 13 and the heat source control device 19. A controller (not illustrated) is connected to the manipulator control device 17, and an operator can instruct any operation of the manipulator control device 17 via the controller.

The manipulator 13 is, for example, an articulated robot, and a filler metal (welding wire) M is supported by a torch 23 provided on a tip end shaft of the manipulator 13 so as to be continuously supplied. The torch 23 holds the filler metal M in a state of protruding from a tip end thereof. A position and posture of the torch 23 can be freely set three-dimensionally within a range of degrees of freedom of a robot arm constituting the manipulator 13. The manipulator 13 preferably has six or more degrees of freedom, and is preferably capable of freely changing an axial direction of a heat source at a tip end thereof. The manipulator 13 may be in various forms, such as an articulated robot having four or more axes illustrated in FIG. 1 or a robot having angle adjustment mechanisms on two or more orthogonal axes.

The torch 23 includes a shield nozzle (not illustrated), and is supplied with shield gas from the shield nozzle. The shield gas blocks the atmosphere, prevents oxidation, nitridation, and the like of molten metal during welding, and reduces welding failures. An arc welding method used in this configuration may be any one of a consumable electrode type such as coated arc welding or carbon dioxide gas arc welding, and a non-consumable electrode type such as the Tungsten Inert Gas (TIG) welding or plasma arc welding, and is appropriately selected depending on an additively manufactured object Wk to be built. Here, gas metal arc welding will be described as an example. In the case of the consumable electrode type, a contact tip is disposed inside the shield nozzle, and the filler metal M to which a current is supplied is held by the contact tip. The torch 23 generates an arc from a tip end of the filler metal M in a shield gas atmosphere while holding the filler metal M.

The filler metal supply device 15 feeds the filler metal M toward the torch 23 of the manipulator 13. The filler metal supply device 15 includes a reel 15a around which the filler metal M is wound, and a feeding mechanism 15b that feeds the filler metal M from the reel 15a. The filler metal M is fed to the torch 23 while being fed forward or backward by the feeding mechanism 15b as necessary. The feeding mechanism 15b is not limited to a push type disposed on a filler metal supply device 15 side to push out the filler metal M, and may be a pull type or a push-pull type disposed on the robot arm or the like.

The heat source control device 19 is a welding power source that supplies electric power required for welding by the manipulator 13. The heat source control device 19 adjusts a welding current and a welding voltage to be supplied at the time of bead formation in which the filler metal is melted and solidified. In addition, a filler metal feeding speed of the filler metal supply device 15 is adjusted in conjunction with welding conditions such as the welding current and the welding voltage set by the heat source control device 19.

A heat source for melting the filler metal M is not limited to the above-described arc. For example, a heat source using another method such as a heating method using both an arc and a laser, a heating method using plasma, or a heating method using an electron beam or a laser may be used. In the case of heating by an electron beam or a laser, a heating amount can be more finely controlled, and a state of a bead to be formed can be more appropriately maintained, thereby contributing to further improvement in quality of an additive structure. In addition, a material of the filler metal M is not particularly limited, and for example, types of the filler metal M to be used may be different according to properties of the additively manufactured object Wk such as mild steel, high-tensile steel, aluminum, aluminum alloy, nickel, and nickel-base alloy.

The shape detector 21 is provided on or in the vicinity of the tip end shaft of the manipulator 13 and sets the vicinity of the tip end of the torch 23 as a measurement region. The shape detector 21 is moved together with the torch 23 by the driving of the manipulator 13, and detects shapes of a bead B and a portion (surface of a base 25 or the existing bead B) serving as a base when a bead B is newly formed. The shape detector 21 may be another detection unit provided at a position different from that of the torch 23. As the shape detector 21, for example, a laser sensor that irradiates the bead B with laser light and detects the light reflected from the bead surface can be used. Examples of a height detection method include various methods such as a light cutting method, a phase difference detection method, a triangulation method, and a time of flight (TOF) method, and the height detection method may be any one method or a combination of these methods. Each method is well known, and thus the description thereof will be omitted here. In order to obtain information on a height distribution in a predetermined region by the shape detector 21, scanning may be performed with the laser light in a predetermined range using a reflecting mirror such as a galvano mirror, or an irradiation range of the laser light may be expanded by operating the manipulator 13. High-speed shape detection can be performed in a non-contact manner by using such an optical shape detection method.

The additive manufacturing system 100 having the above-described configuration operates according to a manufacturing program created based on a manufacturing plan of the additively manufactured object Wk. The manufacturing program includes a large number of command codes, and is created based on an appropriate algorithm according to various conditions such as a shape, a material, and a heat input amount of the manufactured object. When the filler metal M to be fed is melted and solidified while moving the torch 23 according to the manufacturing program, a linear bead which is a molten and solidified body of the filler metal M is formed on the base 25. That is, the manipulator control device 17 drives the manipulator 13 and the heat source control device 19 based on a predetermined program group provided from the building control device 11. The manipulator 13 forms the bead B by moving the torch 23 while melting the filler metal M with an arc, according to a command from the manipulator control device 17. By sequentially forming and depositing the beads B in this manner, the additively manufactured object Wk having a desired shape can be obtained.

The planar base 25 is used here, and the shape of the base 25 is not limited thereto. For example, the base 25 may have a cylindrical shape, and beads may be formed on an outer periphery of a side surface of the cylinder.

A coordinate system of building shape data handled by the additive manufacturing system 100 and a coordinate system on the base 25 on which the additively manufactured object Wk is built are associated with each other. For example, three axes of a coordinate system may be set such that a position in a three-dimensional space is specified using any position as an origin. When the base 25 is formed into a cylindrical shape, a cylindrical coordinate system may be set, and a spherical coordinate system may be set in some cases. Here, an orthogonal coordinate system having an X axis, a Y axis, and a Z axis, in which an upper surface of the base 25 is an XY plane and a normal direction of the upper surface of the base 25 is a Z direction, is defined and described.

The building control device 11 is implemented by, for example, an information processing device such as a personal computer (PC). Each function of the building control device 11 to be described later is implemented by a control unit (not illustrated) reading and executing a program having a specific function stored in a storage device (not illustrated). Examples of the storage device include a memory such as random access memory (RAM) which is a volatile storage area and read only memory (ROM) which is a non-volatile storage area, and a storage such as hard disk drive (HDD) and solid state drive (SSD). Examples of the control unit include a processor such as a central processing unit (CPU) and a micro processor unit (MPU), or a dedicated circuit.

### <Functional Configuration of Building Control Device>

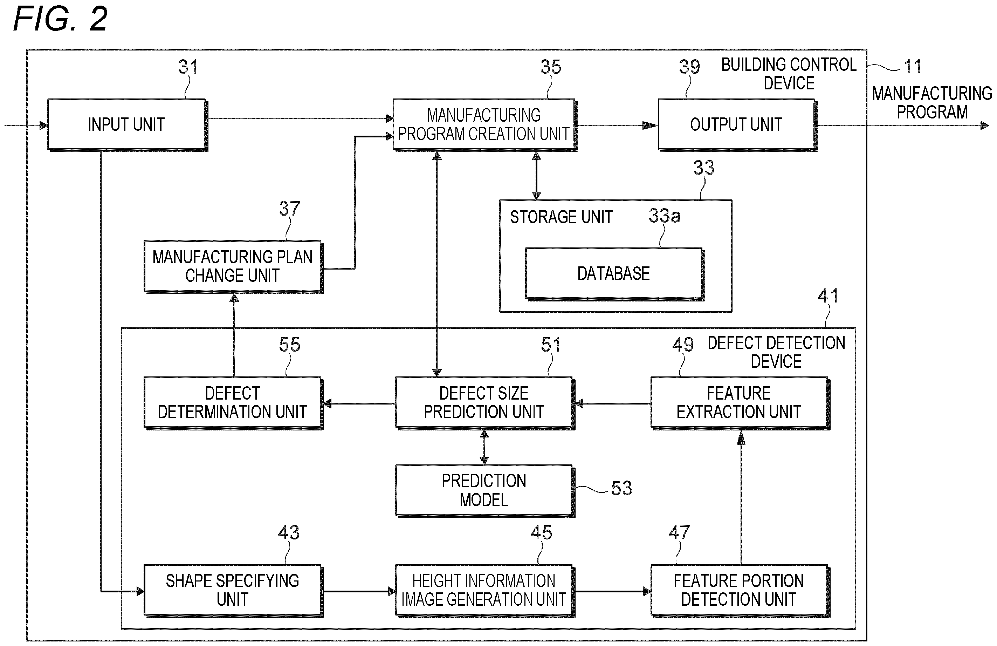

FIG. 2 is a block diagram illustrating a functional configuration of the building control device 11. The building control device 11 includes an input unit 31, a storage unit 33, a manufacturing program creation unit 35, a manufacturing plan change unit 37, an output unit 39, and a defect detection device 41. The defect detection device 41 to be described later in detail may be provided in the building control device 11, may be provided separately from the building control device 11 or may be connected to the building control device 11 by communication or the like.

The input unit 31 acquires various types of information from the outside via, for example, an appropriate network or an appropriate input device. Examples of the information acquired here include shape data including shape information of an object to be additively manufactured such as CAD/CAM data, setting data of the welding conditions, output data from the shape detector 21, and instruction information from a worker. The details of the various types of information will be described later.

The storage unit 33 stores various types of information acquired by the input unit 31 and the manufacturing program described above. In addition, the storage unit 33 holds a database 33a that stores information such as driving conditions such as an operation speed and an operable range of the manipulator 13 when various shapes are built, and various welding conditions that can be set by the heat source control device 19.

The manufacturing program creation unit 35 determines a manufacturing plan such as a bead formation trajectory indicating a path along which the torch 23 moves for bead formation and welding conditions during bead formation with reference to each database of the storage unit 33. In addition, the manufacturing program according to types and specifications of the manipulator 13 and the heat source control device 19 is created based on the created manufacturing plan.

The output unit 39 outputs the manufacturing program created by the manufacturing program creation unit 35 to the manipulator control device 17, the heat source control device 19, and the like. The output unit 39 may display a processing result corresponding to the shape data using an output device (not illustrated) such as a display provided in the building control device 11.

The defect detection device 41 grasps a base shape at the time of bead formation based on information on the output data from the shape detector 21, and determines whether there is a high possibility of occurrence of a welding defect in the bead to be formed. When there is a risk of occurrence of a welding defect, the manufacturing plan change unit 37 sends to, the manufacturing program creation unit 35, the manufacturing plan after correction obtained by changing the above-described welding plan. The manufacturing program creation unit 35 creates a manufacturing program based on the input manufacturing plan after correction and outputs the manufacturing program to the output unit 39.

The defect detection device 41 has a function of predicting the occurrence of a welding defect based on the information on the output data from the shape detector 21 as described above. Specifically, the defect detection device 41 includes a shape specifying unit 43, a height information image generation unit 45, a feature portion detection unit 47, a feature extraction unit 49, a defect size prediction unit 51, a prediction model 53, and a defect determination unit 55. The details of the functions of the respective units will be described later.

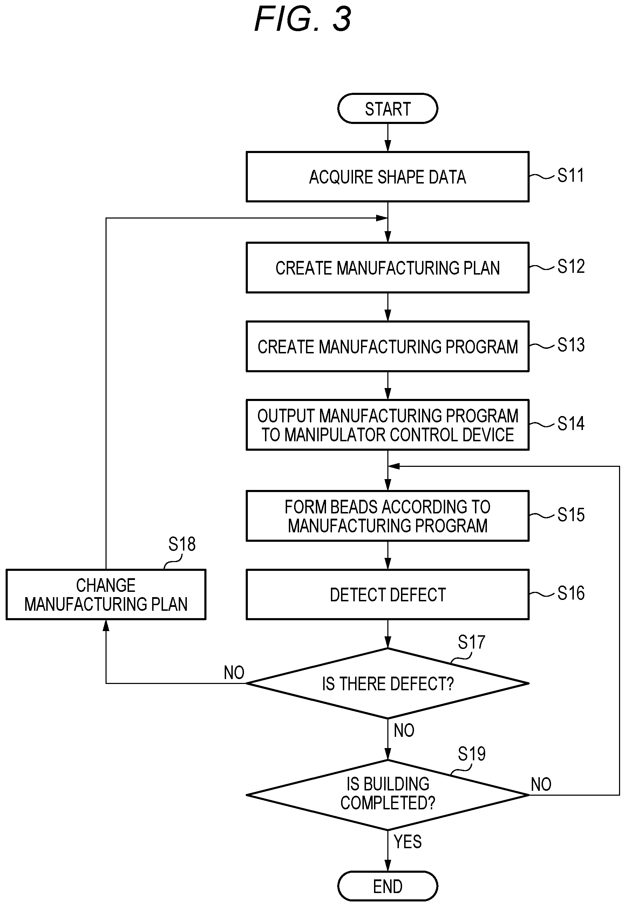

FIG. 3 is a flowchart illustrating a building procedure of the additively manufactured object. Each procedure is performed based on a command from the building control device 11. When the additively manufactured object Wk is built, the building control device 11 first acquires shape data of the additively manufactured object Wk (step 11, hereinafter abbreviated as S11).

The drive conditions and the welding conditions according to the types and specifications of the manipulator 13 and the heat source control device 19 are input to the database 33a in advance in the storage unit 33 of the building control device 11, and the manufacturing program creation unit 35 creates a manufacturing plan of the additively manufactured object Wk according to the input shape data with reference to the database 33a (S2). The creation of the manufacturing plan includes a step of slicing the shape of the additively manufactured object Wk into a predetermined thickness according to a specific algorithm, and determining a bead formation trajectory so as to fill a shape of each sliced layer with a bead having a predetermined width, a step of setting welding conditions of each bead, and the like. Such an algorithm for creating a manufacturing plan is not particularly limited, and may be a well-known algorithm in the related art.

The manufacturing program creation unit 35 creates a manufacturing program for driving each unit such as the manipulator 13 and the heat source control device 19 based on the created manufacturing plan (S13). The created manufacturing program is output from the output unit 39 to the manipulator control device 17 (S14). Therefore, the manipulator control device 17 drives each unit such as the manipulator 13, the filler metal supply device 15, and the heat source control device 19 according to the input manufacturing program to move the torch 23 while generating an arc from the tip end of the torch 23, and forms the beads B along the bead formation trajectory according to the manufacturing plan (S15).

In addition to the formation of the beads B, the shape detector 21 detects height information and outputs output data of the detection result to the input unit 31 of the building control device 11. The defect detection device 41 reads the output data from the shape detector 21, which is input to the input unit 31. The defect detection device 41 detects a feature portion having a specific shape in which a welding defect is likely to occur, specifically, a narrow portion formed between the formed beads, based on the read output data. A position of the detected narrow portion is set as a welding defect candidate. When the defect candidate satisfies a predetermined condition, it is determined that the welding defect occurs if a bead is formed next at the position of the narrow portion (S16). The detection of the welding defect is performed in parallel with the bead formation, but after all the beads B of one layer are formed, processing may be performed for each layer in which shapes of bead surfaces on the layer are collectively detected and a narrow portion is extracted.

When there is a narrow portion that causes a defect, the defect detection device 41 outputs position information (coordinate values) of the narrow portion to the manufacturing plan change unit 37. The manufacturing plan change unit 37 changes the manufacturing plan such that the welding defect caused by the narrow portion is brought to a level that does not pose a problem (S 18). The manufacturing plan change unit 37 outputs the changed manufacturing plan to the manufacturing program creation unit 35. The manufacturing program creation unit 35 creates a manufacturing program based on the changed manufacturing plan (S13).

When no narrow portion is detected, or when a narrow portion is detected but does not satisfy the predetermined condition, the formation of the bead B is continued. The above procedures are repeated until the building of the additively manufactured object Wk is completed (S19).

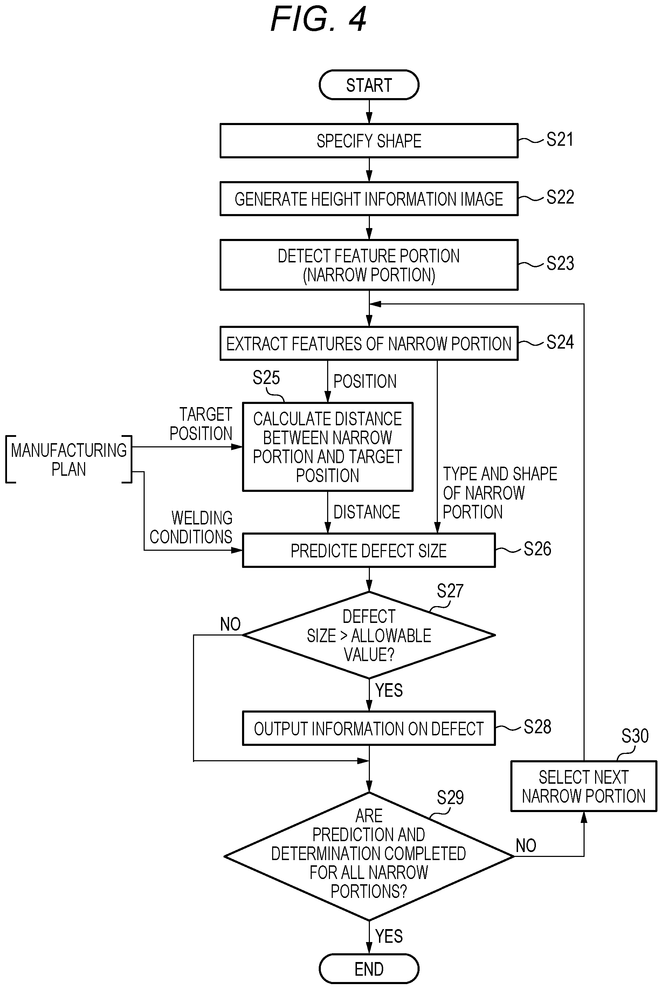

Next, a procedure of a welding defect detection method corresponding to step S16 will be described in detail with reference to FIGS. 1, 2, and 4. FIG. 4 is a flowchart illustrating the procedure of the welding defect detection method.

First, the shape specifying unit 43 reads the output data from the shape detector 21. The output data is data according to the height detection method by the shape detector 21, and does not necessarily include height information directly recorded. Therefore, the shape specifying unit 43 specifies a shape by analyzing the information on the output data and converting the information into information on a height distribution (S21). The conversion into the information on the height distribution is performed according to the height detection method by the shape detector 21. For example, in the light cutting method, the height distribution is obtained by geometric calculation according to a protrusion length (or recess length) of unevenness in a profile of detected bright line of light.

The shape specifying unit 43 outputs the converted information on the height distribution to the height information image generation unit 45. The height information image generation unit 45 converts the input information on the height distribution into a two-dimensional image. That is, the information on the height distribution is expressed as a variable of a brightness value of each pixel of the two-dimensional image, and an image obtained by converting the information on the height distribution into information on a distribution of the brightness value is generated. The image is composed of a large number of pixels of N rows × N columns, and the brightness value of each pixel represents a height of the bead surface or the base detected by the shape detector 21 at a pixel position. That is, the shape specifying unit 43 converts information on a three-dimensional shape of the additively manufactured object detected by the shape detector 21 into information on height distribution, and the height information image generation unit 45 generates a two-dimensional image (S22). The image is also referred to as a "height information image" or "height information image data".

The height information image generation unit 45 outputs the generated height information image to the feature portion detection unit 47. The feature portion detection unit 47 detects a feature portion having a specific shape feature by performing an image processing on the input height information image (S23). As the feature portion, a narrow portion formed as a valley portion between the beads B is used, the feature portion is not limited thereto, and a portion having another shape may be used as long as the shape can cause a welding defect. Here, the narrow portion is detected according to a level of the brightness value of the height information image. As the image processing for detecting a narrow portion, various types of processing such as general contour line extraction, binarization, and mask processing can be used, and accurate detection can be performed in a short time. In this way, by treating the height as information on brightness and converting the information on the height distribution into the height information image represented by a brightness distribution, a narrow portion or the like can be easily detected using a general image processing technique. In addition, a detection algorithm can be easily changed, and thus optimal detection according to a detection target can be easily implemented.

The feature portion detection unit 47 outputs information on the detected narrow portion to the feature extraction unit 49 together with the height information image. The feature extraction unit 49 extracts features of each narrow portion using the input information on the narrow portion and the height information image (S24).

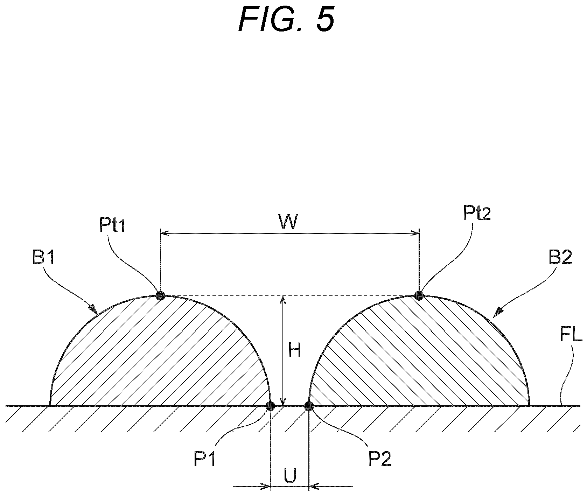

FIG. 5 is a diagram illustrating an example of features of a narrow portion in a cross section of beads orthogonal to a bead formation direction. When a pair of beads B1 and B2 adjacent to each other are formed on a base surface FL that represents the surface of the base 25 (or bead on a lower layer), in the cross section illustrated in FIG. 5, an interval between bead edge portions at a valley bottom between the pair of beads B 1 and B2 is defined as a bottom portion interval U, an interval between a bead top portion Pt1 of the bead B1 and a bead top portion Pt2 of the bead B2 is defined as a bead interval W, an average height of a height from the base surface FL to the bead top portion Pt1 and a height from the base surface FL to the bead top portion Pt2, that is, a valley depth up to the valley bottom formed by the pair of beads B1 and B2, is defined as H. The bottom portion interval U, the bead interval W, and the valley depth H can be adopted as the features of the narrow portion.

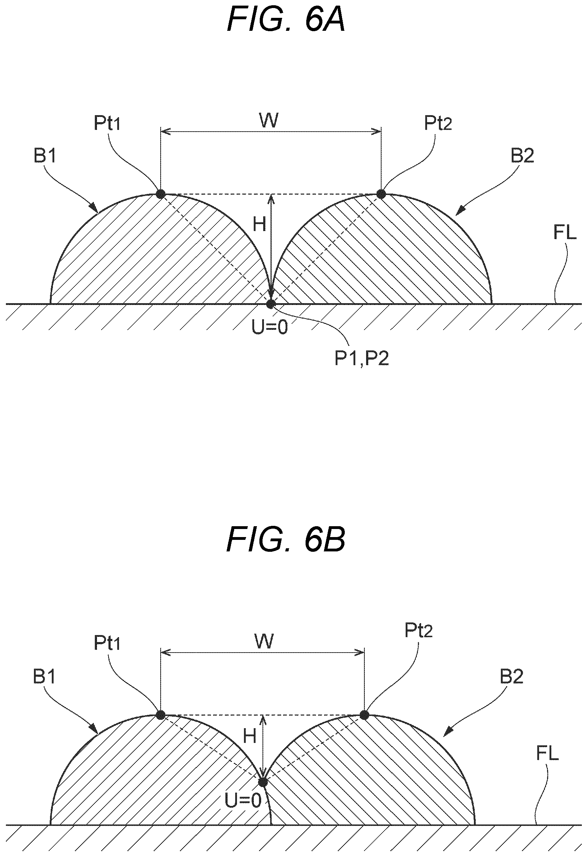

FIGS. 6A and 6B are diagrams illustrating a state in which the interval between the pair of beads illustrated in FIG. 5 is changed. As illustrated in FIG. 6A, when the beads B1 and B2 approach each other to a position at which the beads B1 and B2 are in contact with each other, the bottom portion interval U becomes 0, and the valley depth H becomes a valley depth between beads represented by a triangle of Pt1-Pt2-P1 (P2) shown by dotted lines. As illustrated in FIG. 6B, when the beads B1 and B2 overlap each other, the bottom portion interval U is 0, and the valley depth H is smaller than those in the cases illustrated in FIGS. 5 and 6A. In this way, by providing a combination of the bottom portion interval U, the bead interval W, and the valley depth H as the features, a shape of the valley portion of the narrow portion can be specified. The features are an example, and other parameters such as a cross-sectional area of a shape of a recess portion and an inclination angle of a bead end may be used.

The feature extraction unit 49 outputs information on the features of the narrow portion to the defect size prediction unit 51. The defect size prediction unit 51 obtains a target position of a bead to be formed next in the vicinity of the input narrow portion with reference to the manufacturing plan determined by the manufacturing program creation unit 35, and calculates a distance between a position of the narrow portion and the target position of the bead to be formed next (S25). In addition, the defect size prediction unit 51 obtains the welding conditions under which a bead is formed with reference to the manufacturing plan. The welding conditions include at least one of a travel speed, a welding current, a welding voltage, and a filler metal feeding speed. When a bead is formed in the vicinity of the narrow portion based on each piece of information such as the features of the narrow portion, the distance between the narrow portion and the target position of the bead, and the welding conditions, a defect size of a welding defect occurring at the position of the narrow portion is predicted (S26). By predicting the defect size according to each condition described above, improvement in prediction accuracy and reliability can be expected.

The defect size prediction unit 51 can predict the defect size by using the prediction model 53 generated by machine learning on the features of the narrow portion, the welding conditions under which a bead is formed, and a result obtained experimentally or by simulation of the defect size corresponding to the features and the welding conditions. Examples of a machine learning method for generating the prediction model 53 include methods such as a decision tree, linear regression, random forest, support vector machine, Gaussian process regression, and neural network. A plurality of prediction models 53 may be generated for each type of filler metal. When gathering into one prediction model, the prediction model may be trained by adding some or all pieces of information on components of the filler metal to training data.

The defect size prediction unit 51 predicts a defect size of a welding defect that may occur due to the detected narrow portion, and outputs a prediction result to the defect determination unit 55. The defect determination unit 55 compares the input prediction result of the defect size with a preset allowable value (S27). When it is determined that a predicted value of the defect size exceeds the allowable value, the information on the narrow portion is output to the manufacturing plan change unit 37 (S28). When the prediction result of the defect size is equal to or smaller than the allowable value, the narrow portion is excluded from welding defect candidates, and the prediction and determination of the defect size are repeated for all the detected narrow portions (S29 and S30). According to the determination, a narrow portion that does not particularly pose a problem is excluded from the welding defect candidates, and an accuracy of defect detection is improved.

In the above-described welding defect detection method, the information on the height distribution is obtained based on the output data from the shape detector 21, and is represented as the variable of the brightness value of each pixel of the two-dimensional image, thereby generating a height information image obtained by converting the information on the height distribution into the information on the distribution of the brightness value. By performing an image processing using the height information image, it is possible to easily detect a narrow portion from the height information image and extract features of the narrow portion. In addition, simpler and highly accurate processing can be performed by customizing image processing contents and using a general image processing tool. Furthermore, a large amount of output data output by the shape detector 21 is aggregated as height information image data, and thus an amount of data to be stored can be reduced. A calculation load of the features or the like is reduced, and a device cost can be reduced without requiring a particularly high-performance calculation capability.

By using the machine-learned prediction model 53 to predict a defect size, the defect size can be predicted quickly and with high accuracy. Various types of information such as the obtained height information image, the detected narrow portion, and the predicted welding defect are displayed on a monitor of the output unit 39 of the building control device 11, whereby the worker can visualize and be notified of a situation of building, and convenience is improved. Therefore, it becomes easier to automate the detection of welding defects.

The manufacturing plan for building the additively manufactured object is changed so as to reduce occurrence of the welding defects based on information on the welding defect detected by using the welding defect detection method, and the additively manufactured object is built based on the changed manufacturing plan, whereby a high-quality additively manufactured object in which the occurrence of the welding defects is reduced is stably obtained.

### <Example of Image Processing>

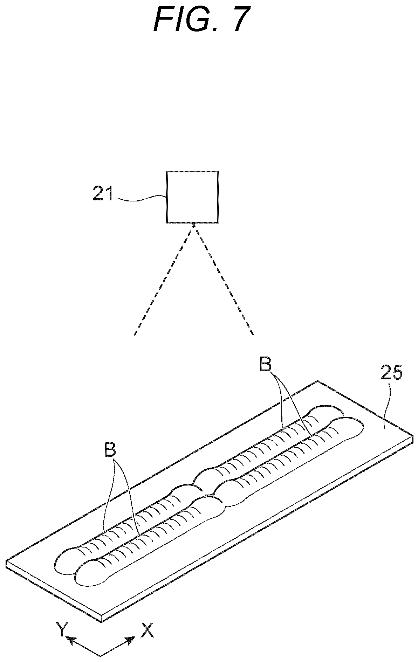

A step of generating a height information image obtained by actually converting height information into brightness information and specifying a position of a welding defect will be described. FIG. 7 is a schematic diagram illustrating a state in which the shape detector 21 measures shapes of the beads B. Here, the measurement objects are a total of four beads B that are formed along one direction (X direction) on the base 25, and in which a pair of beads B formed adjacent to each other in a direction (Y direction) orthogonal to the one direction are formed adjacent to each other at two positions along the one direction. The shape detector 21 detects height information of each bead B rising from the surface of the base 25.

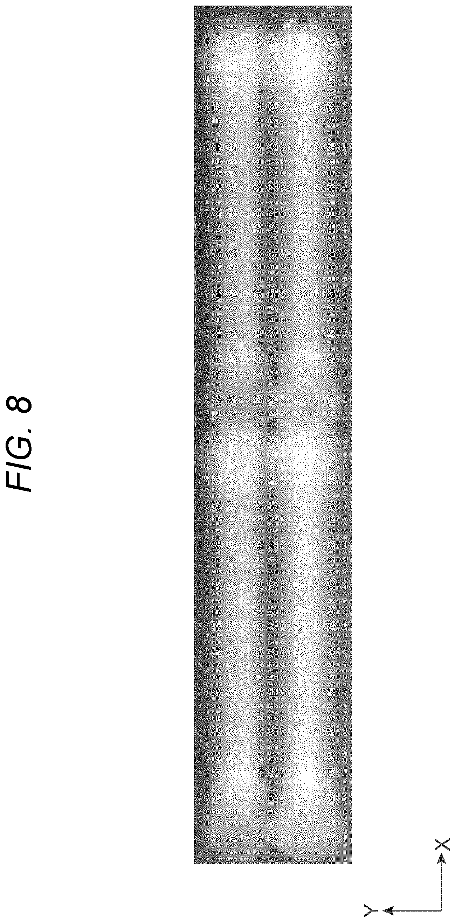

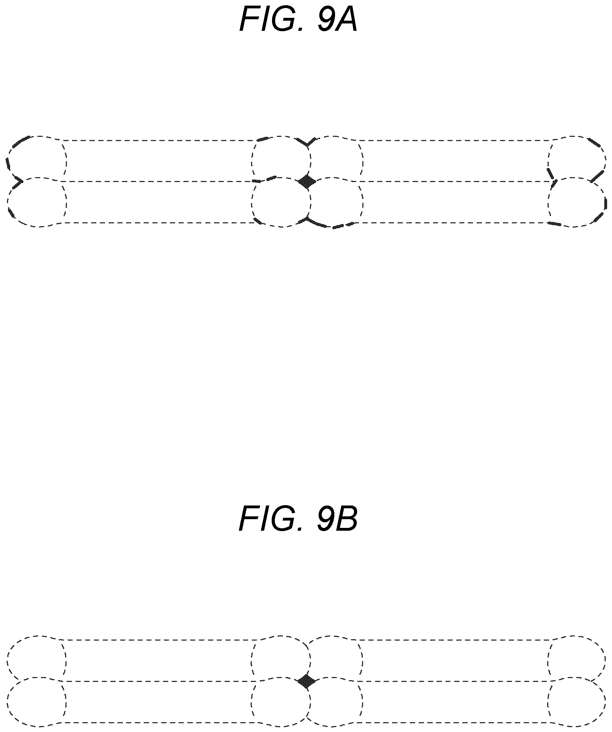

FIG. 8 is an image of height information image data obtained by converting the height information of each bead B illustrated in FIG. 7 into brightness information. A level of brightness of the image illustrated in FIG. 8 corresponds to a height of each bead B from the base 25, and the higher the brightness, the higher the height from the base 25. FIGS. 9A and 9B are diagrams illustrating an image processing result in which contours of bead shapes are extracted according to changes in brightness or the like and narrow portions are extracted from the height information image illustrated in FIG. 8. In the diagrams of FIGS. 9A and 9B, the contours of the beads are indicated by broken lines so that positions of extraction results can be confirmed. In the image processing result, as illustrated in FIG. 9A, many narrow portions (black dotted portions other than the broken lines) are detected along the contours of the beads. The defect sizes of these many narrow portions are predicted based on the features of the narrow portion in steps S24 to S27 in FIG. 4, and narrow portions whose predicted defect sizes are equal to or smaller than the allowable value are deleted. FIG. 9B is a schematic diagram illustrating the narrow portion after a sorting processing is performed. As illustrated in FIG. 9B, the finally extracted narrow portion is a position of a valley portion formed by the intersection of the four beads, and the valley portion having a steepest slope in surfaces of the beads B is detected.

The narrow portion can be accurately detected by performing an image processing on a height information image obtained by converting the detected height information into trajectory information. A detection algorithm for a narrow portion can be easily changed by appropriately replacing or correcting image processing contents according to a situation, and the detection algorithm can be easily optimized. Similarly, an extraction algorithm can be easily optimized in the extraction processing of the features of the narrow portion.

When the additive manufacturing is performed, the shape detector 21 detects a bead height or the like while moving integrally with the torch 23 at a position deviated from the tip end of the torch 23 as illustrated in FIG. 1, and thus when a trajectory for moving the torch 23 is curved, for example, when the torch 23 is inclined, a height detection direction of the shape detector 21 also changes. As a result, a shape of the narrow portion between the beads is detected such that the inclination of the valley portion is gentler than actual, and the features of the narrow portion may become inaccurate.

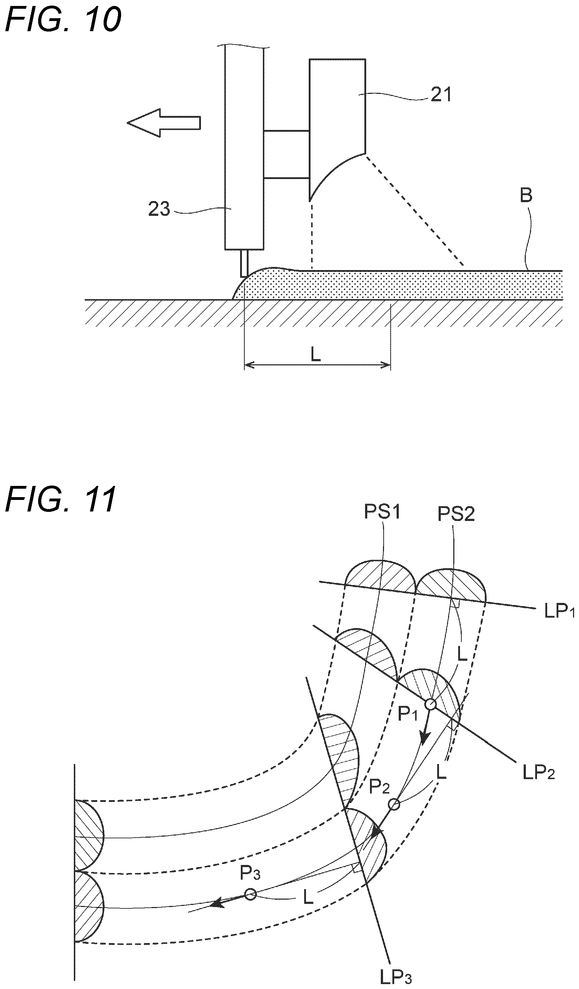

FIG. 10 is a configuration diagram of the torch 23 and the shape detector 21. FIG. 11 is a diagram illustrating a shape detection result by the shape detector 21 when the torch 23 and the shape detector 21 move integrally. As illustrated in FIG. 10, a bead formation position by the torch 23 and a shape detection position by the shape detector 21 do not match, and are deviated by a predetermined distance L. Therefore, as illustrated in FIG. 11, for example, when beads are formed along two parallel curved paths PS1 and PS2, inconvenience may occur. That is, when the bead on the path PS2 is formed along the bead on the path PS1 after the bead on the path PS1 is formed, the shape detector 21 detects a bead shape on a line Lₚ₁ behind a torch position P1 by the distance L at the torch position P1, detects a bead shape on a line Lₚ₂ at a torch position P2, and detects a bead shape on a line Lₚ₃ at a torch position P3. The line Lₚ₁ is substantially orthogonal to a movement direction of the paths PS1 and PS2, and the bead shape detected on the line Lₚ₁ is a shape close to an actual bead cross section. However, in the lines Lₚ₂ and Lₚ₃, the inclination of a valley portion becomes gentler than that of an actual bead shape by deviating from a direction orthogonal to the movement direction of the paths PS1 and PS2. Such torch positions P2 and P3 may be corrected according to directions of the lines Lₚ₂ and Lₚ₃, but the control for the correction becomes complicated and it is difficult to detect the shape in real time.

However, in the welding defect detection method according to the present embodiment, by converting the output data from the shape detector 21 into the height information image, the information detected by the shape detector 21 is also sequentially converted into height information when a bead is formed while moving along a path and a shape is detected. Therefore, height information detected in a plurality of paths can be easily synthesized, and as a result, a height information image which is a two-dimensional height information map can be easily formed. By generating the height information image, the detected height information can also be geometrically converted, and the shape can be easily grasped. Therefore, not only shape profiles on the lines such as the lines Lₚ₁, Lₚ₂, and Lₚ₃, but also shape profiles in any direction can be easily generated, thereby making it possible to accurately grasp the shape.

An example in which the welding defect detection method according to the present embodiment is applied to the additive manufacturing in which the beads B are formed on the base 25 using the manipulator 13 holding the torch 23 has been described, and the application target is not limited to the additive manufacturing. For example, the present embodiment can also be applied to general welding such as fillet welding, butt welding, and multilayer welding in groove, and can be similarly applied to a case in which a predetermined processing is performed after shape detection or height detection is performed.

As described above, the present invention is not limited to the above-described embodiments, and combinations of the respective configurations of the embodiments and changes and applications made by those skilled in the art based on the description of the specification and well-known techniques are also intended for the present invention and are included in the scope of protection.

As described above, the following matters are disclosed in the present specification.
(1) A defect detection method for detecting a welding defect that occurs in an additively manufactured object when the additively manufactured object is built by depositing beads formed by melting and solidifying a filler metal, the method including:
   a height detection step of detecting a height distribution of a surface shape of the additively manufactured object during the building;
   an image generation step of representing information on the detected height distribution as a variable of a brightness value of each pixel of a two-dimensional image, and generating a height information image obtained by converting the information on the height distribution into information on a distribution of the brightness value;
   a feature portion detection step of detecting a shape feature portion having a specific shape feature according to a level of the brightness value of the height information image; and
   a determination step of determining a possibility that the detected shape feature portion becomes the welding defect.
      According to the defect detection method, by using the height information image obtained by converting the height distribution of the surface shape of the additively manufactured object into the distribution of the brightness value, the shape feature portion can be easily detected while reducing an amount of data required to be stored. Accordingly, the detection of the welding defect can be implemented with a fast takt time.
(2) The defect detection method according to (1), in which the height detection step detects the shape feature portion by performing an image processing on the height information image.
   According to the defect detection method, the shape feature portion is detected by the image processing, and thus it is possible to detect the shape feature portion easily and with high accuracy by customizing the image processing contents and using a general image processing tool, and the welding defect can be detected accurately and at high speed.
(3) The defect detection method according to (1) or (2), in which the shape feature portion is a narrow portion in which a valley portion having a height smaller than that of surrounding beads is formed.
   According to the defect detection method, by detecting a narrow portion at which a welding defect is likely to occur, an occurrence position of the welding defect can be accurately specified.
(4) The defect detection method according to any one of (1) to (3), in which the height distribution is detected by using any one of a light cutting method, a phase difference detection method, a triangulation method, and a TOF method, which detects light reflected from a bead surface when the light is irradiated toward the bead.
   According to the defect detection method, high-speed shape detection can be performed in a non-contact manner by using an optical shape detection method for the height distribution.
(5) The defect detection method according to any one of (1) to (4), further including:
   a prediction step of predicting a defect size of the welding defect that occurs when the beads are formed at positions including the shape feature portion, in which
   the determination step compares the predicted defect size with a predetermined allowable value, and determines the shape feature portion as the welding defect when the defect size exceeds the allowable value.
      According to the defect detection method, the welding defect is determined according to the predicted defect size, and thus a shape feature portion that does not particularly pose a problem is excluded from welding defect candidates, and an accuracy of the defect detection is improved.
(6) The defect detection method according to (5), in which the prediction step predicts the defect size based on a prediction model that learns in advance a relation between a feature of the shape feature portion, a welding condition under which the beads are formed, and the defect size corresponding to the feature and the welding condition.
   According to the defect detection method, the defect size is predicted based on the prediction model, and thus it is possible to perform prediction with high accuracy and high speed.
(7) The defect detection method according to (6), in which the feature of the shape feature portion includes at least one of a shape parameter representing a shape of the narrow portion in which the valley portion having a height smaller than that of the surrounding beads is formed, and a distance between a position of the narrow portion and a target position of the bead to be formed next.
   According to the defect detection method, the defect size is predicted according to conditions such as the shape parameter of the narrow portion and the distance between the narrow portion in which the welding defect is likely to occur and the target position of the bead, and thus improvement in prediction accuracy and reliability can be expected.
(8) The defect detection method according to (6) or (7), in which the welding condition includes at least one of a travel speed, a welding current, a welding voltage, and a filler metal feeding speed.
   According to the defect detection method, the defect size corresponding to the welding conditions can be predicted.
(9) A method for manufacturing an additively manufactured object, the method including:
   changing a manufacturing plan for building the additively manufactured object so as to reduce occurrence of the welding defect based on information on the welding defect detected by using the defect detection method according to any one of (1) to (8); and
   building the additively manufactured object based on the changed manufacturing plan.
      According to the method for manufacturing an additively manufactured object, the additively manufactured object is built so that the predicted welding defect does not occur, and thus a high-quality additively manufactured object in which the occurrence of the welding defects is reduced is stably obtained.
(10) A defect detection device that detects a welding defect that occurs in an additively manufactured object when the additively manufactured object is built by depositing beads formed by melting and solidifying a filler metal, the device including:
   a shape detection unit configured to detect a height distribution of a surface shape of the additively manufactured object;
   an image generation unit configured to represent information on the detected height distribution as a variable of a brightness value of each pixel of a two-dimensional image, and generate a height information image obtained by converting the information on the height distribution into information on a distribution of the brightness value;
   a feature portion detection unit configured to detect a shape feature portion having a specific shape feature according to a level of the brightness value of the height information image; and
   a defect determination unit configured to determine a possibility that the detected shape feature portion becomes the welding defect.
      According to the defect detection device, by using the height information image obtained by converting the height distribution of the surface shape of the additively manufactured object into the distribution of the brightness value, the shape feature portion can be easily detected while reducing an amount of data required to be stored. Accordingly, the detection of the welding defect can be implemented with a fast takt time.
(11) The defect detection device according to (10), further including:
   a feature extraction unit configured to extract a feature related to at least one of a shape and a position of the detected shape feature portion;
   a prediction model configured to learn a relation between a welding condition under which the beads are formed, the feature, and a defect size of the welding defect corresponding to the welding condition and the feature; and
   a defect size prediction unit configured to predict the defect size based on the prediction model from the feature of the detected shape feature portion and information on the welding condition of the beads on which the shape feature portion is formed, in which
   the defect determination unit compares the predicted defect size with a predetermined allowable value, and determines the shape feature portion as the welding defect when the defect size exceeds the allowable value.
   According to the defect detection device, the defect size is predicted based on the prediction model, and thus it is possible to perform prediction with high accuracy and high speed.
(12) An additive manufacturing system including:
   the defect detection device according to (11);
   a building control device configured to change a manufacturing plan for building the additively manufactured object so as to reduce occurrence of the welding defect detected by the defect detection device; and
   a building device configured to build the additively manufactured object based on the changed manufacturing plan.
      According to the additive manufacturing system, the additively manufactured object is built so that the predicted welding defect does not occur, and thus a high-quality additively manufactured object in which the occurrence of the welding defects is reduced is stably obtained.
(13) A program causing a computer to execute a procedure of a defect detection method for detecting a welding defect that occurs in an additively manufactured object when the additively manufactured object is built by depositing beads formed by melting and solidifying a filler metal, the program causing the computer to execute:
   a height detection procedure of detecting a height distribution of a surface shape of the additively manufactured object during the building;
   an image generation procedure of representing information on the detected height distribution as a variable of a brightness value of each pixel of a two-dimensional image, and generating a height information image obtained by converting the information on the height distribution into information on a distribution of the brightness value;
   a feature portion detection procedure of detecting a shape feature portion having a specific shape feature according to a level of the brightness value of the height information image; and
   a determination procedure of determining a possibility that the detected shape feature portion becomes the welding defect.

According to the program, by using the height information image obtained by converting the height distribution of the surface shape of the additively manufactured object into the distribution of the brightness value, the shape feature portion can be easily detected while reducing an amount of data required to be stored. Accordingly, the detection of the welding defect can be implemented with a fast takt time.

The present application is based on Japanese Patent Application No. 2022-025093 filed on February 21, 2022, the contents of which are incorporated herein by reference.

### REFERENCE SIGNS LIST

11: building control device
13: manipulator
15: filler metal supply device
15a: reel
17: manipulator control device
19: heat source control device
21: shape detector
23: torch
25: base
31: input unit
33: storage unit
33a: database
35: manufacturing program creation unit
37: manufacturing plan change unit
39: output unit
41: defect detection device
43: shape specifying unit
45: height information image generation unit
47: feature portion detection unit
49: feature extraction unit
51: defect size prediction unit
53: prediction model
100: additive manufacturing system
M: filler metal

## Claims

1. A defect detection method for detecting a welding defect that occurs in an additively manufactured object when the additively manufactured object is built by depositing beads formed by melting and solidifying a filler metal, the method comprising:
a height detection step of detecting a height distribution of a surface shape of the additively manufactured object during the building;
an image generation step of representing information on the detected height distribution as a variable of a brightness value of each pixel of a two-dimensional image, and generating a height information image obtained by converting the information on the height distribution into information on a distribution of the brightness value;
a feature portion detection step of detecting a shape feature portion having a specific shape feature according to a level of the brightness value of the height information image; and
a determination step of determining a possibility that the detected shape feature portion becomes the welding defect.

2. The defect detection method according to claim 1, wherein
the height detection step detects the shape feature portion by performing an image processing on the height information image.

3. The defect detection method according to claim 1, wherein
the shape feature portion is a narrow portion in which a valley portion having a height smaller than that of surrounding beads is formed.

4. The defect detection method according to claim 2, wherein
the shape feature portion is a narrow portion in which a valley portion having a height smaller than that of surrounding beads is formed.

5. The defect detection method according to any one of claims 1 to 4, wherein
the height distribution is detected by using any one of a light cutting method, a phase difference detection method, a triangulation method, and a TOF method, which detects light reflected from a bead surface when the light is irradiated toward the bead.

6. The defect detection method according to any one of claims 1 to 4, further comprising:
a prediction step of predicting a defect size of the welding defect that occurs when the beads are formed at positions including the shape feature portion, wherein
the determination step compares the predicted defect size with a predetermined allowable value, and determines the shape feature portion as the welding defect when the defect size exceeds the allowable value.

7. The defect detection method according to claim 5, further comprising:
a prediction step of predicting a defect size of the welding defect that occurs when the beads are formed at positions including the shape feature portion, wherein
the determination step compares the predicted defect size with a predetermined allowable value, and determines the shape feature portion as the welding defect when the defect size exceeds the allowable value.

8. The defect detection method according to claim 6, wherein
the prediction step predicts the defect size based on a prediction model that learns in advance a relation between a feature of the shape feature portion, a welding condition under which the beads are formed, and the defect size corresponding to the feature and the welding condition.

9. The defect detection method according to claim 7, wherein
the prediction step predicts the defect size based on a prediction model that learns in advance a relation between a feature of the shape feature portion, a welding condition under which the beads are formed, and the defect size corresponding to the feature and the welding condition.

10. The defect detection method according to claim 8, wherein
the feature of the shape feature portion includes at least one of a shape parameter representing a shape of the narrow portion in which the valley portion having a height smaller than that of the surrounding beads is formed, and a distance between a position of the narrow portion and a target position of the bead to be formed next.

11. The defect detection method according to claim 9, wherein
the feature of the shape feature portion includes at least one of a shape parameter representing a shape of the narrow portion in which the valley portion having a height smaller than that of the surrounding beads is formed, and a distance between a position of the narrow portion and a target position of the bead to be formed next.

12. The defect detection method according to claim 8, wherein
the welding condition includes at least one of a travel speed, a welding current, a welding voltage, and a filler metal feeding speed.

13. The defect detection method according to claim 10, wherein
the welding condition includes at least one of a travel speed, a welding current, a welding voltage, and a filler metal feeding speed.

14. A method for manufacturing an additively manufactured object, the method comprising:
changing a manufacturing plan for building the additively manufactured object so as to reduce occurrence of the welding defect based on information on the welding defect detected by using the defect detection method according to any one of claims 1 to 4; and
building the additively manufactured object based on the changed manufacturing plan.

15. A method for manufacturing an additively manufactured object, the method comprising:
changing a manufacturing plan for building the additively manufactured object so as to reduce occurrence of the welding defect based on information on the welding defect detected by using the defect detection method according to claim 5; and
building the additively manufactured object based on the changed manufacturing plan.

16. A method for manufacturing an additively manufactured object, the method comprising:
changing a manufacturing plan for building the additively manufactured object so as to reduce occurrence of the welding defect based on information on the welding defect detected by using the defect detection method according to claim 6; and
building the additively manufactured object based on the changed manufacturing plan.

17. A defect detection device that detects a welding defect that occurs in an additively manufactured object when the additively manufactured object is built by depositing beads formed by melting and solidifying a filler metal, the device comprising:
a shape detection unit configured to detect a height distribution of a surface shape of the additively manufactured object;
an image generation unit configured to represent information on the detected height distribution as a variable of a brightness value of each pixel of a two-dimensional image, and generate a height information image obtained by converting the information on the height distribution into information on a distribution of the brightness value;
a feature portion detection unit configured to detect a shape feature portion having a specific shape feature according to a level of the brightness value of the height information image; and
a defect determination unit configured to determine a possibility that the detected shape feature portion becomes the welding defect.

18. The defect detection device according to claim 17, further comprising:
a feature extraction unit configured to extract a feature related to at least one of a shape and a position of the detected shape feature portion;
a prediction model configured to learn a relation between a welding condition under which the beads are formed, the feature, and a defect size of the welding defect corresponding to the welding condition and the feature; and
a defect size prediction unit configured to predict the defect size based on the prediction model from the feature of the detected shape feature portion and information on the welding condition of the beads on which the shape feature portion is formed, wherein
the defect determination unit compares the predicted defect size with a predetermined allowable value, and determines the shape feature portion as the welding defect when the defect size exceeds the allowable value.

19. An additive manufacturing system comprising:
the defect detection device according to claim 18;
a building control device configured to change a manufacturing plan for building the additively manufactured object so as to reduce occurrence of the welding defect detected by the defect detection device; and
a building device configured to build the additively manufactured object based on the changed manufacturing plan.

20. A program causing a computer to execute a procedure of a defect detection method for detecting a welding defect that occurs in an additively manufactured object when the additively manufactured object is built by depositing beads formed by melting and solidifying a filler metal, the program causing the computer to execute:
a height detection procedure of detecting a height distribution of a surface shape of the additively manufactured object during the building;
an image generation procedure of representing information on the detected height distribution as a variable of a brightness value of each pixel of a two-dimensional image, and generating a height information image obtained by converting the information on the height distribution into information on a distribution of the brightness value;
a feature portion detection procedure of detecting a shape feature portion having a specific shape feature according to a level of the brightness value of the height information image; and
a determination procedure of determining a possibility that the detected shape feature portion becomes the welding defect.
